# EUROPÄISCHE PATENTSCHRIFT

(11) **EP 1 289 382 B1**
(45) Veröffentlichungstag und Bekanntmachung des Hinweises auf die Patenterteilung: **31.05.2006**
(21) Anmeldenummer: 01956473.1
(22) Anmeldetag: 13.06.2001
(51) Int. Cl.: A23L 1/29, A23L 1/303

(54) **INSTABILE ZUSATZSTOFFE ENTHALTENDES NAHRUNGSMITTELERZEUGNIS**
FOOD PRODUCT CONTAINING UNSTABLE ADDITIVES
PRODUIT ALIMENTAIRE CONTENANT DES ADDITIFS INSTABLES

(30) Priorität: 13.06.2000 DE 10029079
(43) Veröffentlichungstag der Anmeldung: 12.03.2003
(73) Patentinhaber: Mars, Inc., McLean, VA 22101-3883 (US)
(72) Erfinder: PANNEVIS, Marinus, D-27283 Verden (DE); STEIN VON KAMIENSKI, Botho, D-27283 Verden (DE); CAPET, Olivier, F-45750 St. Pryvé St. Mesmin (FR); SCHMIDT, Siegfried, D-27283 Verden (DE)
(74) Vertreter: Winkler, Andreas Fritz Ernst
(86) Internationale Anmeldenummer: PCT/EP2001/006715
(87) Internationale Veröffentlichungsnummer: WO 2001/095745

(56) Entgegenhaltungen:
- WO-A-93/14645
- WO-A-98/03080
- US-A- 4 018 908
- US-A- 4 460 610
- US-A- 4 971 820
- US-A- 6 136 353

## Beschreibung

Die Erfindung betrifft ein instabile Zusatzstoffe enthaltendes Nahrungsmittelerzeugnis, mit einem aus einem porösen Grundmaterial bestehenden Nahrungsmittelkörper, der mit einem instabile Zusatzstoffe enthaltenden Trägermaterial versehen ist.

Aus dem US-Patent 5,968,569 ist ein Nahrungsmittelerzeugnis bekannt, das probiotische Mikroorganismen enthält, wobei entweder ein probiotische Mikroorganismen enthaltendes Trägermaterial auf ein Grundmaterial aufgesprüht oder alternativ ein Hohlraum innerhalb des Grundmaterials mit dem Trägermaterial gefüllt wird.

Aus der WO 93/14645 A ist ein Verfahren zur Herstellung von Futtermittelpellets bekannt, wobei bei der Herstellung Futterpellets als poröses Grundmaterial zunächst unter Vakuum mit einer Enzymlösung in Kontakt gebracht werden und dann durch Nachlassen des Vakuums die Lösung in die Pellets eindringt und diese Imprägniert.

Aus der US-A-4 460 610 ist ein Verfahren zur Imprägnierung von Gemüsebananen mit Orangensaft bekannt, bei dem mit Unterdruck und Überdruck gearbeitet wird.

Die WO 98/03080 A offenbart ein Verfahren zur Befettung von Futtermittelpellets mit Hilfe von Vakuum.

Die US-A-4 971 820 offenbart ein Verfahren zum Herstellen von Futtermittelpellets, bei dem den porösen Pellets eine Nährmittellösung unter Vakuum zugeführt wird.

Aus der US-A-4 018 908 ist ein Verfahren zum Verarbeiten von zellulären Substanzen bekannt, insbesondere für Tiemahrungsprodukte.

Die US-A-6 136 353 offenbart ein Verfahren und eine Vorrichtung zum Einbringen von fettigen Substanzen in granulierte Nahrungsmittelprodukte, wobei mit Unterdruck gearbeitet wird, um Poren weitestgehend auszufüllen.

Die Aufgabe der Erfindung besteht darin, ein Verfahren anzugeben, mit dem eine verbesserte Dosierung und gleichmäßigere Verteilung des die genannten instabilen Zusatzstoffe enthaltenden Trägermaterials auf dem Grundmaterial erzielt werden kann, und mit dem eine bessere Versiegelung und eine längere Lebensdauer der instabilen Zusatzstoffe innerhalb des Nahrungsmittelerzeugnisses gewährleistet ist.

Diese Aufgabe wird erfindungsgemäß durch ein instabile Zusatzstoffe enthaltendes Nahrungsmittelerzeugnis gelöst, mit einem aus einem porösen Grundmaterial bestehenden Nahrungsmittelkörper, der mit einem instabile Zusatzstoffe enthaltenden Trägermaterial versehen ist, dadurch erhältlich, daß in einem ersten Schritt das Grundmaterial einem Unterdruck ausgesetzt wird, in einem zweiten Schritt das instabile Zusatzstoffe enthaltende Trägermaterial in fließfähiger Form bei dem Unterdruck auf das Grundmaterial aufgebracht wird, und in einem dritten Schritt der Druck erhöht wird, so daß das Trägermaterial in die Poren des porösen Grundmaterials hineingedrückt wird und diese weitestgehend ausfüllt.

Erfindungsgemäß kann vorgesehen sein, daß das Trägermaterial probiotische Mikroorganismen enthält.

Erfindungsgemäß kann vorgesehen sein, daß das Trägermaterial bioaktive Substanzen enthält, insbesondere Enzyme.

Alternativ oder zusätzlich kann das Trägermaterial Wirkstoffe wie Curcumin oder "New Zealand Green-Lipped Mussle" (GLM, Perna Canaliculus) bzw. Auszüge davon enthalten. Perna Canaliculus enthält Proteoglycane in relativ hoher Konzentration und stellt einen natürlichen, entzündungshemmenden Wirkstoff dar. Weiterhin kann vorgesehen sein, daß das Trägermaterial L-Glutamin enthält.

Ferner kann das Trägermaterial Vitamine, Aromastoffe und/oder pharmazeutische Stoffe enthalten. Allgemein kann das Trägermaterial temperaturempfindliche Stoffe bzw. solche Stoffe enthalten, die im Kontakt mit Wasser oder feuchten Materialien oder auch Luft (Sauerstoff) instabil sind, d.h. sich zersetzen oder in sonstiger Weise ihre gewünschten vorteilhaften Eigenschaften oder Vitalität verlieren, wie dies bspw. bei Vitaminstoffen oder Mikroorganismen der Fall sein kann.

Das Grundmaterial kann ein Extrudat sein und bspw. Getreide und/oder Reis enthalten.

Das Trägermaterial kann Fett, Öl oder eine andere Flüssigkeit enthalten.

Bevorzugt weist das Nahrungsmittelerzeugnis eine luftdichte Umhüllung aus einem Beschichtungsmaterial auf, wobei das Beschichtungsmaterial teithaltig sein kann, Geschmacksstoffe enthalten kann und wenigstens teilweise aus Schokolade bestehen kann,

Bevorzugt ist vorgesehen, daß nicht mit Trägermaterial gefüllte Poren bzw. Porenbereiche wenigstens teilweise mit einem Schutzgas, insbesondere Stickstoff oder Kohlendioxid, gefüllt sind.

Das Trägermaterial kann Bacillus lichniformis und/oder Bacillus subtilis und/oder Laktobacillus acidophilus La5 enthalten.

Der Unterdruck kann zwischen 40 mbar und 990 mbar, insbesondere 200 mbar, betragen.

Es kann vorgesehen, daß der Druck, dem das Grundmaterial indem ersten Schritt ausgesetzt ist, innerhalb einer Übergangszeit, ausgehend von Atmosphärendruck, bis auf den Unterdruck reduziert wird.

Weiter kann vorgesehen sein, daß der Druck in dem dritten Schritt des über Atmosphärendruck erhöht wird.

Das Grundmaterial kann zu Beginn des ersten Schritts eine Temperatur aufweisen, die im Bereich oder unter der dem Unterdruck entsprechenden Siedetemperatur von Wasser liegt.

In Ausgestaltung der Erfindung kann vorgesehen sein, daß das Grundmaterial extrudiert wird und unmittelbar danach der erste Schritt ausgeführt wird, so daß das Grundmaterial weiter expandiert und innerhalb des ersten Schritts getrocknet und gleichzeitig abgekühlt wird.

Es kann vorgesehen sein, daß das Grundmaterial zu Beginn des ersten Schritts eine Temperatur von mehr als 90°C aufweist.

Weiter kann vorgesehen sein, daß das Grundmaterial vor dem ersten Schritt vorgetrocknet wird.

Wenn das Grundmaterial innerhalb des ersten Schritts getrocknet wird, kann vorgesehen sein, daß der Unterdruck gehalten wird, bis das Grundmaterial eine Temperatur von 30°C oder weniger erreicht hat.

Während des ersten Schritts kann Zusatzenergie zugeführt werden, insbesondere in Form von Infrarot- oder Mikrowellenstrahlung.

Weitere Vorteile und Merkmale der Erfindung ergeben sich aus der folgenden Beschreibung bevorzugter Ausführungsbeispiele, wobei auf eine Zeichnung Bezug genommen ist, in der
Fig. 1 beispielhaft den zeitlichen Verlauf von Produkttemperatur und Druck bei der Herstellung des erfindungsgemäßen Nahrungsmittelerzeugnisses zeigt,
Fig. 2 beispielhaft eine Anordnung zur Ausführung des in Fig. 1 erläuterten Verfahrens zeigt, und
Fig. 3 in einer ähnlichen Darstellung wie Fig. 1 den zeitlichen Verlauf von Produkttemperatur und Druck bei einem alternativen Verfahren zur Herstellung des Nahrungsmittelerzeugnisses zeigt.

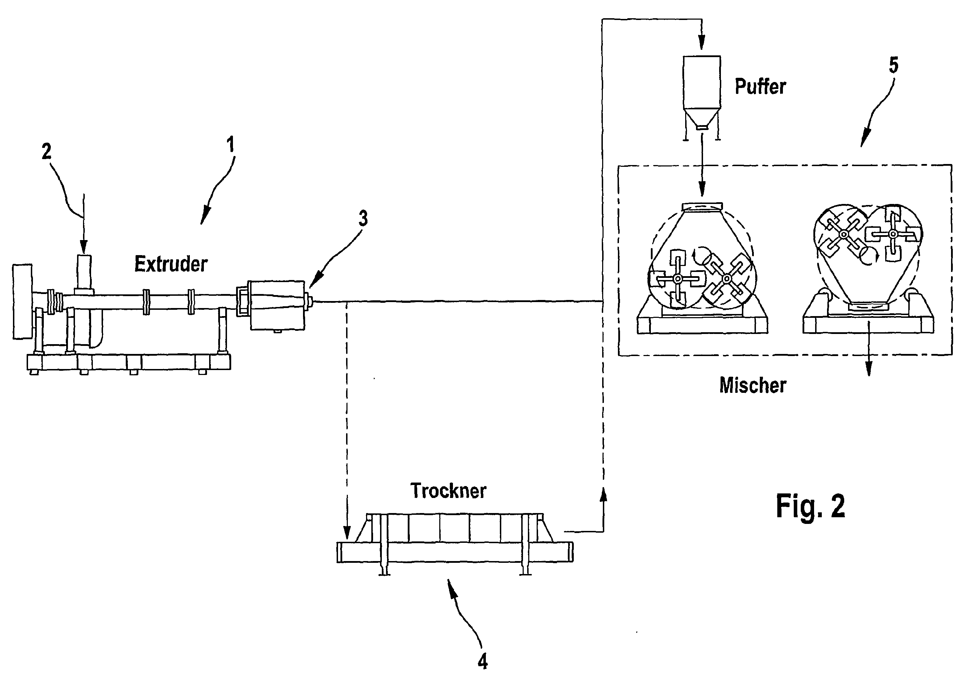

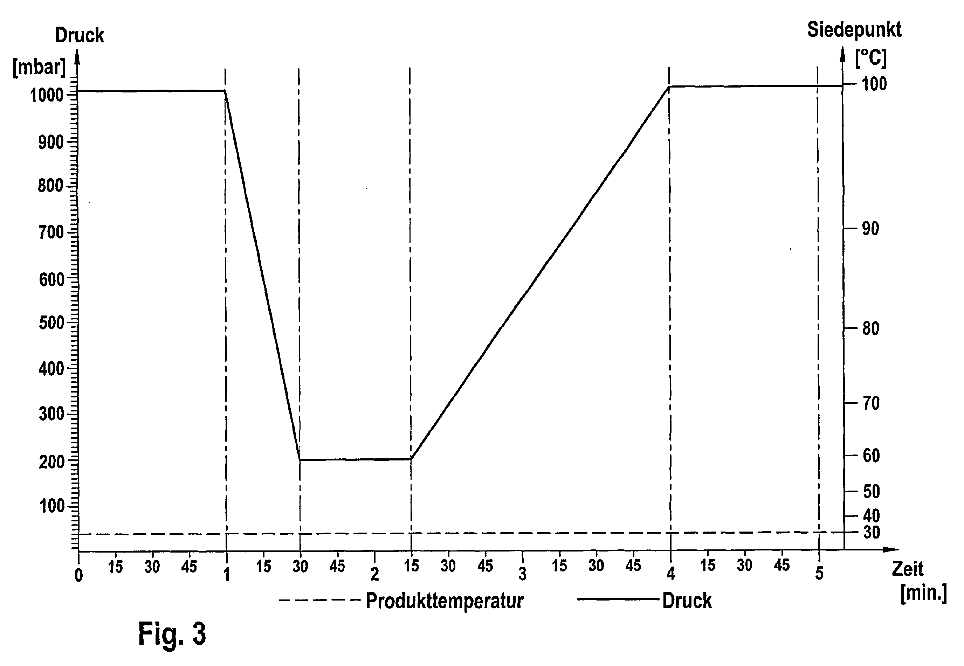

Zur Erläuterung des Herstellungsverfahrens sei zunächst auf Fig. 2 und 3 Bezug genommen. Ein aus unterschiedlichen Nahrungsmittelbestandteilen bestehendes, zu extrudierendes Gemisch tritt in den Extruder 1 ein (Pfeil 2) und verläßt diesen an dessen Austrittsmündung 3 mit einer Temperatur von ca. 100°C. Das extrudierte Erzeugnis, das das poröse Grundmaterial bzw. eine Matrix für das später aufzubringende Trägermaterial bildet, wird in einem Trockner 4 getrocknet und anschließend in einem Mischer 5 mit einem Trägermaterial versehen.

Fig. 3 dient zur Erläuterung der zeitlichen Abfolge der Vorgänge bei der Vakuumbeschichtung innerhalb des Mischers 5. Extrudiertes, getrocknetes und auf ca. 30°C abgekühltes, poröses Grundmaterial wird in Form von einzelnen Nahrungsmittelkörpern ("kibbles") bei Umgebungsdruck in den mit seiner Beschickungsöffnung nach oben weisenden Mischer 5 eingefüllt (linke Darstellung in Fig. 2). Die Einfüllöffnung wird verschlossen und der Innendruck innerhalb einer relativ kurzen Zeit von z.B. etwa 1,5 Minuten auf einen bestimmten Unterdruck abgesenkt. Der Unterdruck kann bspw. 40 mbar oder auch 200 mbar betragen und richtet sich neben technischen Randbedingungen auch danach, was für Zusatzstoffe, z.B. probiotische Mikroorganismen, das zuzuführende Trägermaterial enthält und wie empfindlich diese gegenüber reduziertem Druck sind, so daß möglichst keine Schädigung empfindlicher Stoffe bzw. der Mikroorganismen eintritt.

Vor, nach oder gleichzeitig mit dem Einfüllen des Grundmaterials wird das Trägermaterial in den Mischer eingeführt, bspw. durch Sprühen, und das Grundmaterial mit diesem vermischt. Idealerweise bildet sich dabei eine möglichst gleichmäßige Schicht aus fließfähigem Trägermaterial auf der Außenfläche der einzelnen Nahrungsmittelkörper des Grundmaterials.

Anschließend wird der Druck im Mischer wieder bis auf Umgebungsdruck (oder kurzfristig darüber hinaus) gesteigert, wobei das Trägermaterial tief in die porösen Hohlräume des extrudierten Grundmaterials gedrückt wird. Um die empfindlichen Zusatzstoffe wie bspw. die probiotischen Mikroorganismen so weit wie möglich zu isolieren und von Luftsauerstoff und sonstigen Einflüssen abzuschirmen, kann der Druckaufbau mittels eines Schutzgases erfolgen, bspw. Stickstoff oder Kohlendioxid, welches in die Poren eindringt und die nicht mit Trägermaterial gefüllten Poren bzw. Porenbereiche ausfüllt. Als Variante kann der gesamte in dem Mischer ablaufende Vorgang unter Luftausschluß ablaufen, d.h. in einer Schutzgasatmosphäre, so daß das Trägermaterial zu keiner Zeit mit Luft in Berührung kommt.

Die Produkttemperatur beträgt während des gesamten Vorgangs nahezu unverändert ca. 30°C, was der Einfülltemperatur des Grundmaterials entspricht. Das Trägermaterial hat normalerweise eine Temperatur von ca. 30°C, könnte aber, wenn keine besondere Schädigung der Zusatzstoffe zu befürchten ist, eine etwas höhere Temperatur aufweisen, bspw. 50°C.

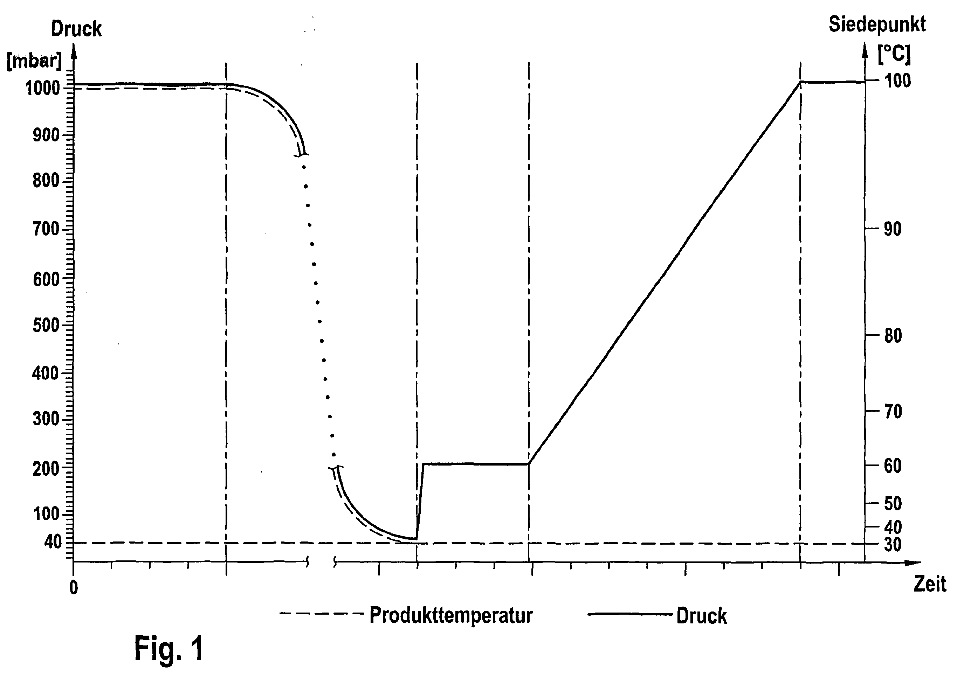

Alternativ ist eine Verfahrensführung entsprechend Fig. 1 möglich. Hierbei wird das extrudierte, poröse Grundmaterial, das den Extruder 1 mit ca. 100°C verläßt, zunächst nicht gekühlt und mit ca. 95°C in den Mischer 5 eingebracht. An dieser Stelle sei noch darauf verwiesen, daß in Fig. 1 und 3 auf der rechten Seite der Siedepunkt von Wasser aufgetragen ist, der dem jeweils links angegebenen Druck entspricht. 200 mbar entsprechen somit einem Siedepunkt von ca. 60°C, 40 mbar ca. 3 0°C usw..

Nach Verschließen des Mischers wird der Druck auf ca. 200 mbar oder weiter, bspw. bis auf 40 mbar (Fig. 1) abgesenkt, womit aufgrund der Siedepunktabsenkung und der damit einhergehenden Verdampfung eines Teils des in dem extrudierten Material enthaltenen Wasser ggf. eine (weitere) Aufblähung und eine erhebliche Abkühlung und Trocknung verbunden sind. Nachdem der Druck den angestrebten Unterdruck von bspw. 40 mbar oder 200 mbar erreicht hat und ggf. eine gewisse Zeit auf diesem Wert verharrt hat, ist bspw. nach Abkühlung auf 60°C (Siedepunkt bei 200 mbar) oder 30°C (Siedepunkt bei 40 mbar) oder auch weniger eine gewünschte Trocknung und Abkühlung eingetreten.

Danach wird das Trägermaterial auf die in dem Mischer befindlichen Nahrungsmittelkörper aufgebracht.

Im übrigen entspricht die Vorgehensweise dem in Bezug auf Fig. 3 erläuterten Verfahren. Da bei einer solchen gleichzeitig mit bzw. unmittelbar vor dem Aufbringen des Trägermaterials erfolgenden Vakuumtrocknung nur geringe lokale Schwankungen des Feuchtigkeitsgehalts auftreten, ergibt sich eine sehr genaue Feuchteeinstellung, so daß der Mittelwert des Feuchtegehalts im Vergleich zu einer Heißlufttrocknung um ca. 1 Gew.-% angehoben werden kann. Dadurch ergeben sich erhebliche Energieeinsparungen.

Unabhängig von der gewählten Verfahrensführung werden die Nahrungsmittelkörper abschließend mit einem Beschichtungsmaterial beschichtet.

Die durch die Erfindung erreichten Vorteile liegen einerseits darin, daß die probiotischen Mikroorganismen bzw. sonstigen empfindlichen Zusatzstoffe in den Poren eines porösen Grundmaterials versiegelt und vor Umgebungseinflüssen (Luftsauerstoff oder Wasser oder sonstige Stoffe) abgeschirmt sind, so daß deren Lebensdauer wesentlich länger als bei Auftragung auf die Oberfläche ist.

Weiterhin ist die erreichbare Dosierungsgenauigkeit im Vergleich zu herkömmlichen Techniken wesentlich besser, so daß eine gleichmäßigere Beladung eines Nahrungsmittelerzeugnisses mit gewünschten Zusatzstoffen erreicht wird.

Ein weiterer Vorteil der Erfindung liegt darin, daß sowohl bei der Herstellung als auch bei der Handhabung des fertigen Erzeugnisses eine wesentlich geringere Wahrscheinlichkeit dafür besteht, daß bspw. probiotische Mikroorganismen unbeabsichtigt übertragen werden, da sich die Mikroorganismen im wesentlichen abgeschirmt innerhalb des Erzeugnisses in den Poren des Grundmaterials befinden.

Die Erfindung schafft somit die Möglichkeit, nicht nur Tierfutter, sondern auch Snackprodukte zum menschlichen Verzehr, bspw. Getreide- oder Reisprodukte, mit bestimmtem Zusatzstoffen wie bspw. probiotischen Mikroorganismen anzureichern, deren positive Auswirkungen auf die Gesundheit bekannt sind.

## Patentansprüche

1. Instabile Zusatzstoffe enthaltendes Nahrungsmittelerzeugnis, mit einem aus einem porösen Grundmaterial bestehenden Nahrungsmittelkörper, der mit einem instabile Zusatzstoffe enthaltenden Trägermaterial versehen ist, **dadurch** erhältlich, daß in einem ersten Schritt das Grundmaterial einem Unterdruck ausgesetzt wird, in einem zweiten Schritt das instabile Inhaltsstoffe enthaltende Trägermaterial in fließfähiger Form bei dem Unterdruck auf das Grundmaterial aufgebracht wird, und in einem dritten Schritt der Druck erhöht wird, so daß das Trägermaterial in die Poren des porösen Grundmaterials hineingedrückt wird und diese weitestgehend ausfüllt, wobei der Druck mittels eines Schutzgases, insbesondere Stickstoff oder Kohlendioxid, erhöht wird.

2. Nahrungsmittelerzeugnis nach Anspruch 1, **dadurch gekennzeichnet, daß** das Trägermaterial probiotische Mikroorganismen enthält.

3. Nahrungsmittelerzeugnis nach Anspruch 1 oder 2, **dadurch gekennzeichnet, daß** das Trägermaterial bioaktive Substanzen enthält, insbesondere Enzyme.

4. Nahrungsmittelerzeugnis nach einem der vorangehenden Ansprüche, **dadurch gekennzeichnet, daß** das Trägermaterial Curcumin enthält.

5. Nahrungsmittelerzeugnis nach einem der vorangehenden Ansprüche, **dadurch gekennzeichnet, daß** das Trägermaterial Perna Canaliculus ("New Zealand Green-Lipped Mussle") oder Extrakte davon enthält.

6. Nahrungsmittelerzeugnis nach einem der vorangehenden Ansprüche, **dadurch gekennzeichnet, daß** das Trägermaterial L-Glutamin enthält.

7. Nahrungsmittelerzeugnis nach einem der vorangehenden Ansprüche, **dadurch gekennzeichnet, daß** das Trägermaterial Vitamine und/oder Aromastoffe enthält.

8. Nahrungsmittelerzeugnis nach einem der vorangehenden Ansprüche, **dadurch gekennzeichnet, daß** das Trägermaterial pharmazeutische Stoffe enthält.

9. Nahrungsmittelerzeugnis nach einem der vorangehenden Ansprüche, **dadurch gekennzeichnet, daß** das Trägermaterial temperaturempfindliche und/oder gegenüber Wasser oder Luft empfindliche Stoffe enthält.

10. Nahrungsmittelerzeugnis nach Anspruch 9, **dadurch gekennzeichnet, daß** das Grundmaterial ein Extrudat ist.

11. Nahrungsmittelerzeugnis nach einem der vorangehenden Ansprüche, **dadurch gekennzeichnet, daß** das Grundmaterial Getreide und/oder Reis enthält.

12. Nahrungsmittelerzeugnis nach einem der vorangehenden Ansprüche, **dadurch gekennzeichnet, daß** das Trägermaterial Fett, Öl oder eine andere Flüssigkeit enthält.

13. Nahrungsmittelerzeugnis nach einem der vorangehenden Ansprüche, **dadurch gekennzeichnet, daß** es eine luftdichte Umhüllung aus einem Beschichtungsmaterial aufweist.

14. Nahrungsmittelerzeugnis nach Anspruch 13, **dadurch gekennzeichnet, daß** das Beschichtungsmaterial fetthaltig ist.

15. Nahrungsmittelerzeugnis nach Anspruch 13 oder 14, **dadurch gekennzeichnet, daß** das Beschichtungsmaterial Geschmacksstoffe enthält.

16. Nahrungsmittelerzeugnis nach einem der Ansprüche 13 bis 15, **dadurch gekennzeichnet, daß** das Beschichtungsmaterial wenigstens teilweise aus Schokolade besteht.

17. Nahrungsmittelerzeugnis nach einem der vorangehenden Ansprüche, **dadurch gekennzeichnet, daß** nicht mit Trägermaterial gefüllte Poren bzw. Porenbereiche wenigstens teilweise mit dem Schutzgas, insbesondere Stickstoff oder Kohlendioxid, gefüllt sind.

18. Nahrungsmittelerzeugnis nach einem der vorangehenden Ansprüche, **dadurch gekennzeichnet, daß** das Trägermaterial Bacillus lichniformis und/oder Bacillussubtilis und/oder Lactobacillus acidophilus La5 enthält.

19. Nahrungsmittelerzeugnis nach einem der vorangehenden Ansprüche, **dadurch** erhältlich, daß der Unterdruck zwischen 40 mbar und 990 mbar, insbesondere 200 mbar, beträgt.

20. Nahrungsmittelerzeugnis nach einem der vorangehenden Ansprüche, **dadurch** erhältlich, daß der Druck, dem das Grundmaterial in dem ersten Schritt ausgesetzt ist, innerhalb einer Übergangszeit, ausgehend von Atmosphärendruck, bis auf den Unterdruck reduziert wird.

21. Nahrungsmittelerzeugnis nach einem der vorangehenden Ansprüche, **dadurch** erhältlich, daß der Druck in dem dritten Schritt bis über Atmosphärendruck erhöht wird.

22. Nahrungsmittelerzeugnis nach einem der vorangehenden Ansprüche, **dadurch** erhältlich, daß das Grundmaterial zu Beginn des ersten Schritts eine Temperatur aufweist, die im Bereich oder unter der dem Unterdruck entsprechenden Siedetemperatur von Wasser liegt.

23. Nahrungsmittelerzeugnis nach einem der vorangehenden Ansprüche, **dadurch** erhältlich, daß das Grundmaterial extrudiert wird und danach der erste Schritt ausgeführt wird, so daß das Grundmaterial weiter expandiert und innerhalb des ersten Schritts getrocknet und gleichzeitig abgekühlt wird.

24. Nalirungsmittelerzeugnis nach einem der Ansprüche 1 bis 21 oder 23, **dadurch gekennzeichnet, daß** das Grundmaterial zu Beginn des ersten Schritts mehr als 90°C aufweist.

25. Nahrungsmittelerzeugnis nach einem der vorangehenden Ansprüche, **dadurch** erhältlich, daß das Grundmaterial vor dem ersten Schritt vorgetrocknet wird.

26. Nahrungsmittelerzeugnis nach einem der vorangehenden Ansprüche, **dadurch** erhältlich, daß der Unterdruck gehalten wird, bis das Grundmaterial eine Temperatur von 30°C oder weniger erreicht hat.

27. Nahrungsmittelerzeugnis nach einem der vorangehenden Ansprüche, **dadurch** erhältlich, daß während des ersten Schritts Zusatzenergie, insbesondere in Form von Infrarot- oder Mikrowellenstrahlung, zugeführt wird.

## Claims

1. A food product containing unstable additives with a foodstuff body, which consists of a porous base material and is provided with a carrier material containing unstable additives, which may be obtained by subjecting the base material to a reduced pressure in a first step, applying the carrier material containing the unstable additives in flowable form to the base material under reduced pressure in a second step and increasing the pressure in a third step so that the carrier material is forced into the pores of the porous base material and fills them to the greatest extent possible, the pressure being increased by means of a protective gas, particularly nitrogen or carbon dioxide.

2. A food product as claimed in claim 1, **characterised in that** the carrier material contains probiotic microorganisms.

3. A food product as claimed in claim 1 or 2, **characterised in that** the carrier material contains bioactive substances, particularly enzymes.

4. A food product as claimed in one of the preceding claims **characterised in that** the carrier material contains curcumin.

5. A food product as claimed in one of the preceding claims **characterised in that** the carrier material contains Perna Canaliculus (New Zealand green-pipped mussel) or extracts thereof.

6. A food product as claimed in one of the preceding claims **characterised in that** the carrier material contains L-glutamine.

7. A food product as claimed in one of the preceding claims, **characterised in that** the carrier material contains vitamins and/or flavourings.

8. A food product as claimed in one of the preceding claims, **characterised in that** the carrier material contains pharmaceutical substances.

9. A food product as claimed in one of the preceding claims, **characterised in that** the carrier material contains substances which are temperature sensitive and/or sensitive to water or air.

10. A food product as claimed in claim 9, **characterised in that** the base material is an extrudate.

11. A food product as claimed in one of the preceding claims, **characterised in that** the base material contains cereal and/or rice.

12. A food product as claimed in one of the preceding claims, **characterised in that** the carrier material contains fat, oil or another liquid.

13. A food product as claimed in one of the preceding claims, **characterised in that** it has an air-tight sheath of a coating material.

14. A food product as claimed in claim 13, **characterised in that** the coating material contains fat.

15. A food product as claimed in claim 13 or 14, **characterised in that** the coating material contains flavourings.

16. A food product as claimed in one of claims 13 to 15, **characterised in that** the coating material consists at least partially of chocolate.

17. A food product as claimed in one of the preceding claims, **characterised in that** pores or pore regions which are not filled with carrier material are filled at least partially with the protective gas, particularly nitrogen or carbon dioxide.

18. A food product as claimed in one of the preceding claims, **characterised in that** the carrier material contains Bacillus lichniformis and/or Bacillus subtilis and/or Lactobacillus acidophilus La5.

19. A food product as claimed in one of the preceding claims which is obtainable with the reduced pressure being between 40 mbar and 990 mbar, particularly 200 mbar.

20. A food product as claimed in one of the preceding claims which is obtainable with the pressure, to which the base material is subjected in the first step, particularly within a transition period, being reduced to the reduced pressure starting from atmospheric pressure.

21. A food product as claimed in one of the preceding claims which is obtainable with the pressure being increased in the third step to above atmospheric pressure.

22. A food product as claimed in one of the preceding claims, **characterised in that** the base material has a temperature at the beginning of the first step which is in the region of or below the boiling temperature of water, corresponding to the reduced pressure.

23. A food product as claimed in one of the preceding claims which is obtainable by the base material being extruded and the first step then being performed so that the base material is further expanded and is dried and simultaneously cooled within the first step.

24. A food product as claimed in one of claims 1 to 21 or 23, **characterised in that** the base material is at more than 90°C at the beginning of the first step.

25. A food product as claimed in one of the preceding claims which is obtainable by the base material being pre-dried before the first step.

26. A food product as claimed in one of the preceding claims which is obtainable by the reduced pressure being maintained until the base material has reached a temperature of 30°C or less.

27. A food product as claimed in one of the preceding claims which is obtainable by additional energy, particularly in the form of infra red or microwave radiation, being supplied during the first step.

## Revendications

1. Produit alimentaire contenant des additifs instables, avec un corps alimentaire constitué d'une matière de base poreuse, qui est dotée d'une matière support contenant des additifs instables, pouvant être obtenu en soumettant, au cours d'une première étape, la matière de base à une pression négative, en déposant, au cours d'une deuxième étape, la matière support contenant les additifs instables sous forme liquide sous pression négative sur la matière de base et en augmentant la pression, au cours d'une troisième étape, de sorte que la matière support soit compressée pour pénétrer dans les pores de la matière de base poreuse et que ceux-ci soient largement remplis, la pression étant augmentée au moyen d'un gaz protecteur, en particulier l'azote ou le dioxyde de carbone.

2. Produit alimentaire selon la revendication 1, **caractérisé en ce que** la matière support contient des micro-organismes probiotiques.

3. Produit alimentaire selon la revendication 1 ou 2, **caractérisé en ce que** la matière support contient des substances bioactives, en particulier des enzymes.

4. Produit alimentaire selon l'une quelconque des revendications précédentes, **caractérisé en ce que** la matière support contient de la curcumine.

5. Produit alimentaire selon l'une quelconque des revendications précédentes, **caractérisé en ce que** la matière support contient de la *Perna Canaliculus* ("moule aux orles verts de Nouvelle-Zélande") ou des extraits de celle-ci.

6. Produit alimentaire selon l'une quelconque des revendications précédentes, **caractérisé en ce que** la matière support contient de la L-glutamine.

7. Produit alimentaire selon l'une quelconque des revendications précédentes, **caractérisé en ce que** la matière support contient des vitamines et/ou des arômes.

8. Produit alimentaire selon l'une quelconque des revendications précédentes, **caractérisé en ce que** la matière support contient des agents pharmaceutiques.

9. Produit alimentaire selon l'une quelconque des revendications précédentes, **caractérisé en ce que** la matière support contient des substances sensibles à la température et/ou sensibles à l'eau ou à l'air.

10. Produit alimentaire selon la revendication 9, **caractérisé en ce que** la matière de base est un produit extrudé.

11. Produit alimentaire selon l'une quelconque des revendications précédentes, **caractérisé en ce que** la matière de base contient des céréales et/ou du riz.

12. Produit alimentaire selon l'une quelconque des revendications précédentes, **caractérisé en ce que** la matière support contient de la graisse, de l'huile ou un autre liquide.

13. Produit alimentaire selon l'une quelconque des revendications précédentes, **caractérisé en ce qu'**il présente une enveloppe étanche à l'air constituée d'une matière d'enrobage.

14. Produit alimentaire selon la revendication 13, **caractérisé en ce que** la matière d'enrobage contient de la graisse.

15. Produit alimentaire selon la revendication 13 ou 14, **caractérisé en ce que** la matière d'enrobage contient des arômes.

16. Produit alimentaire selon l'une quelconque des revendications 13 à 15, **caractérisé en ce que** la matière d'enrobage se compose au moins partiellement de chocolat.

17. Produit alimentaire selon l'une quelconque des revendications précédentes, **caractérisé en ce que** les pores ou zones des pores qui ne sont pas remplis de matière support sont au moins partiellement remplis de gaz protecteur, en particulier d'azote ou de dioxyde de carbone.

18. Produit alimentaire selon l'une quelconque des revendications précédentes, **caractérisé en ce que** la matière support contient des *Bacillus lichniformis* et/ou *Bacillus subtilis* et/ou *Lactobacillus acidophilus La5.*

19. Produit alimentaire selon l'une quelconque des revendications précédentes, pouvant être obtenu en fixant la pression négative entre 40 mbar et 990 mbar, en particulier à 200 mbar.

20. Produit alimentaire selon l'une quelconque des revendications précédentes, pouvant être obtenu en réduisant la pression, à laquelle est soumis la matière de base au cours de la première étape, en un temps transitoire, en partant de la pression atmosphérique, pour aller à la pression négative.

21. Produit alimentaire selon l'une quelconque des revendications précédentes, pouvant être obtenu en augmentant la pression jusqu'à la pression atmosphérique au cours de la troisième étape.

22. Produit alimentaire selon l'une quelconque des revendications précédentes, pouvant être obtenu en ce que la matière de base au début de la première étape présente une température qui se situe dans la plage ou sous la température d'ébullition de l'eau correspondant à la pression négative.

23. Produit alimentaire selon l'une quelconque des revendications précédentes, pouvant être obtenu en extrudant la matière de base et puis en réalisant ensuite la première étape de manière à ce que la matière de base soit encore expansée et séchée et simultanément refroidie au cours de la première étape.

24. Produit alimentaire selon l'une quelconque des revendications 1 à 21 ou 23, **caractérisé en ce que** la matière de base présente une température de plus de 90°C au début de la première étape.

25. Produit alimentaire selon l'une quelconque des revendications précédentes, pouvant être obtenu en séchant au préalable la matière de base avant la première étape.

26. Produit alimentaire selon l'une quelconque des revendications précédentes, pouvant être obtenu en maintenant la pression négative jusqu'à ce que la matière de base ait atteint une température de 30°C ou moins.

27. Produit alimentaire selon l'une quelconque des revendications précédentes, pouvant être obtenu en amenant de l'énergie additionnelle, en particulier sous forme de rayonnement infrarouge ou micro-ondes, au cours de la première étape.
